# EUROPEAN PATENT APPLICATION

(11) **EP 4 181 258 A1**
(43) Date of publication of application: **17.05.2023**
(21) Application number: 21208546.8
(22) Date of filing: 16.11.2021
(51) Int. Cl.: H01M 10/054, H01M 4/62, H01M 10/0562, H01M 10/0565, H01M 4/38, H01M 4/60, H01M 50/417, H01M 50/44, H01M 50/437, H01M 10/0569, H01M 10/0568

(54) **BORATE-BASED GEL-POLYMER ELECTROLYTE FOR RECHARGEABLE MAGNESIUM BATTERIES**

(71) Applicant: Universität Stuttgart, 70174 Stuttgart (DE)
(72) Inventor: BUCHMEISER, Michael R., 73630 Remshalden (DE); WANG, Peiwen, 70565 Stuttgart (DE)
(74) Representative: Meissner Bolte Partnerschaft mbB

(57) **Abstract**

The invention concerns electrochemical cells composed of a magnesium anode, a sulfur cathode, an Li- and Mg-containing gel-polymer electrolyte (GPE) embedded in a separator, wherein the GPE is situated between the cathode and the anode. In particularly suitable electrochemical cells, the respective gel-polymer electrolyte is prepared via crosslinking of poly(tetrahydrofuran) with a mixture of magnesium and lithium borohydrides. Corresponding electrochemical cells exhibit an effective suppression of the 'polysulfide shuttle' and allow for stable cycling or room temperature with high discharge capacities. The invention further concerns batteries and battery stacks comprising such electrochemical cells, respective gel-polymer electrolytes and separators impregnated with such electrolytes, as well as the use of such batteries and battery stacks for storing energy and for use in various mobile and stationary applications.

## Description

The invention concerns electrochemical cells composed of a magnesium anode, a sulfur or an intercalation cathode, a Li- and Mg-containing gel-polymer electrolyte (GPE) embedded in a separator, wherein the GPE is situated between the cathode and the anode, and is preferably prepared via crosslinking of poly(tetrahydrofuran) with a mixture of magnesium and lithium borohydrides. The invention further concerns batteries and battery stacks comprising such electrochemical cells, respective gel-polymer electrolytes and separators impregnated with such electrolytes, as well as the use of such batteries and battery stacks for storing energy and for use in various mobile and stationary applications.

### State of the art

Currently, lithium-ion batteries are still the most common energy storage materials. However, due to safety issues and insufficient amounts of available lithium, research on post-lithium-ion batteries emerged to replace lithium-ion batteries (J. Fanous, M. Wegner, J. Grimminger, A. Andresen, M. R. Buchmeiser, Chem. Mater. 2011, 23, 5024; J. Fanous, M. Wegner, M. B. M. Spera, M. R. Buchmeiser, J. Electrochem. Soc. 2013, 160, A1169; S. Li, Z. Zeng, J. Yang, Z. Han, W. Hu, L. Wang, J. Ma, B. Shan, J. Xie, ACS Appl. Energy Mater. 2019, 2, 2956).

Due to the non-dendritic plating manner (P. Wang, M. R. Buchmeiser, Adv. Funct. Mater. 2019, 29, 1905248) and the high theoretical energy density of magnesium (3832 mA·h·cm⁻³) compared to lithium (2062 mA·h·cm⁻³) or sodium (1128 mA·h·cm⁻³, P. Wang, J. Trück, S. Niesen, J. Kappler, K. Küster, U. Starke, F. Ziegler, A. Hintennach, M. R. Buchmeiser, Batteries & Supercaps 2020, 3, 1239; P. Wang, J. Kappler, B. Sievert, J. Hacker, K. Küster, U. Starke, F. Ziegler, M. R. Buchmeiser, Electrochim. Acta 2020, 361, 137024; P. Wang, K. Küster, U. Starke, C. Liang, R. Niewa, M. R. Buchmeiser, J. Power Sources 2021, 515, 230604), magnesium-sulfur batteries or magnesium-ion batteries are good candidates to replace lithium-ion batteries. A magnesium-sulfur cell can provide a theoretical energy density of 1722 Wh/kg with an open circuit voltage at -1.7 V (Z. Zhao-Karger, M. Fichtner, Front. Chem. 2018, 6, 656). Despite of these advantages, research on magnesium-sulfur batteries is still very limited compared to lithium-sulfur or sodium-sulfur batteries (P. Wang, M. R. Buchmeiser, Adv. Funct. Mater. 2019, 29, 1905248).

Currently, only liquid electrolytes are used in magnesium-sulfur batteries. These are magnesium tetrakis(hexafluoroisopropyloxy) borate (Mg[B(hfip)₄]₂ dissolved in various ether-based solvents (Z. Zhao-Karger, M. E. G. Bardaji, O. Fuhr, M. Fichtner, J. Mater. Chem. A 2017, 5, 10815), or AI-, B- or Y-based Lewis acids that are reacted *in situ* with magnesium salts to form the electroactive species (S. S. Kim, S. C. Bevilacqua, K. A. See, ACS Appl Mater Interfaces 2020, 12, 5226; H. Kim, T. S. Arthur, G. D. Allred, J. Zajicek, J. G. Newman, A. E. Rodnyansky, A. G. Oliver, W. C. Boggess, J. Muldoon, Nat. Commun. 2011, 427, 1), to name just a few. However, these liquid electrolytes suffer from the problem of polysulfide shuttle, which results in corrosion of the magnesium anode, loss of active material, and, consequently, low cycling stability. In addition, the reported electrolytes so far generally lack compatibility with different cathodes, which impedes further practical use.

Clearly, there is a need for magnesium-sulfur and magnesium-ion batteries, respectively, which provide high cycling stability, good flexibility and high safety.

According to the present invention, this problem is solved by a novel cell design based on a gel-polymer-electrolyte (GPE) that can effectively overcome the issues entailed with cells based on liquid electrolytes. Generally, polymer-based electrolytes can greatly promote the development of rechargeable metal-sulfur batteries due to the improved safety, prevention of electrolyte leakage and the suppression of polysulfide shuttle. The GPE outlined here is e.g. prepared via a one-step in-situ crosslinking reaction between lithium borohydride, magnesium borohydride and poly(tetrahydrofuran). If nanoparticles such as titanium dioxide are incorporated into the electrolyte as additive, the overpotential of respective electrochemical cells can be significantly reduced. The GPE displays outstanding ionic conductivities in a wide temperature range, superior polarization behavior, remarkable reversibility and, more strikingly, excellent compatibility with different sulfur and intercalation cathodes, in particular with a sulfurated poly(acrylonitrile) ("SPAN") composite and titanium disulfide or sulfur-impregnated activated carbon cloth (ACC/S). The effective suppression of the 'polysulfide shuttle' by the GPE allows for a stable cycling of Mg-SPAN cells at room temperature with high discharge capacities (600 mAh·gₛ⁻¹). Remarkably, the Mg-SPAN system using this GPE shows low self-discharge, excellent flexibility and safety characteristics, which significantly improve its practical use.

### Description of the invention

In the investigations underlying the invention, it has unexpectedly been found that the above-indicated drawbacks currently related to magnesium-sulfur and magnesium ion batteries can be eliminated with an electrochemical cell, wherein the anode is based on magnesium, the cathode is based on a SPAN cathode, an Mg-ACC/S based cathode or an intercalation cathode and the electrolyte is gel-like, and comprises Mg and Li as cations. Mg-SPAN cells have been found to show high discharge capacities > 600 mAh/g_{sulfur}, ca. 99% Coulombic efficiency, and high cycle stability. Mg-TiS₂ cells also show high discharge capacity 235 mAh/g_{TiS2}, about 98% Coulombic efficiency and high cycle stability. In addition, Mg-LTO cells also stably deliver ca. 100 mA g_{LTO}⁻¹ with approximately 99.5% Coulombic efficiency at 0.2 C at room temperature. Mg-ACC/S cells deliver ca. 420 mAh/g_{sulfur}, ca. 99% Coulombic efficiency for at least 50 cycles, and also show high cycle stability.

Accordingly, a first aspect of the present invention is directed at an electrochemical cell comprising a magnesium anode, a cathode based on sulfurated poly(acrylonitrile) (SPAN), sulfur-impregnated activated carbon cloth (ACC/S) or an intercalation cathode, a Li- and Mg-containing gel-polymer electrolyte and a separator, wherein the separator and the electrolyte are arranged between the cathode and the anode. Preferably, the electrolyte is embedded in the separator.

A suitable precursor to provide the lithium and magnesium in the Li- and Mg-containing gel-polymer electrolyte are a non-halogen lithium and magnesium salts. Preferably, the concentration of the lithium salt to provide the electrolyte is higher than that of the magnesium salt, more preferably higher by a factor of at least two, even more preferably by a factor of at least 5 and even more preferably by a factor of at least 10.

In a particularly preferred embodiment, the Li- and Mg-containing gel-polymer electrolyte is obtained by crosslinking a solution of polytetrahydrofurane with a solution of a magnesium borohydride and a lithium borohydride, wherein the borohydride is of the type [BH₂R¹R²]⁻ and R¹ and R² are the same or different and are selected from H, alkyl, or alkoxy, in a solvent. In such electrolyte, the borohydride acts as a crosslinker in that it reacts with the polytetrahydrofurane via formation of polytetrahydrofurane-O-B bonds and in this manner provides the gel-polymer electrolyte, wherein solvent molecules are captured/immobilized.

The gel-polymer electrolyte is preferably "halogen-free", which means that salts within the electrolyte do not comprise halogens as the respective counter ions and preferably also the counter-ions do not contain halogen atoms, which are covalently bound to other atoms in the counter ion. Thus, the term "halogen-free" intends to indicate that the electrolyte does not contain any halogens, whether in ionic form or covalently bound to constituents of the electrolyte, except for unavoidable impurities.

With regard to the electrolyte, it is further noted that lithium as additional ion in the electrolyte in the context of this application was found to be a crucial constituent to provide the required high discharge capacity. Attempts to prepare electrolytes with only a Mg-salt (e.g. Mg(BH₄)₂) did not provide appropriate gel-polymer electrolytes due to the poor solubility of the magnesium salt. This problem was obviated by the concurrent use of a lithium salt.

The electrochemical cell according to the invention preferably comprises a magnesium borohydride and/or a lithium borohydride, wherein the borohydride is of the type [BH₂R¹R²]⁻ and R¹ and R² are the same or different and are selected from H, C₁₋₆-alkyl, or C₁₋₆-alkoxy. In a particularly preferred embodiment R¹ and R² are both H, in which case the formula of the borohydride is [BH₄]⁻.

The amount of Mg(BH₂R¹R²)₂ and Li(BH₂R¹R²), which is used to prepare the gel-polymer electrolyte as noted above, is not subject to any relevant restrictions, except that the respective contents should be high enough to provide the required gel structure and sufficiently low to accommodate solvent in the electrolyte to facilitate the Mg-ion transport. As noted above, however, it is preferred that the concentration of the lithium salt to provide the electrolyte is higher than that of the magnesium salt. A particularly suitable Mg(BH₂R¹R²)₂ concentration for the production of a corresponding electrolyte is from 0.01 - 5 mol/L, and in particular from 0.05 - 0.2 mol/L. A particularly suitable Li(BH₂R¹R²) concentration is from 0.01 - 5 mol/L, in particular from 0.5 to 2.0 mol/L, and especially about 1.5 mol/L (± 10%).

The polytetrahydrofurane, which may be used in the gel-polymer electrolyte of the invention preferably has a molecular weight Mn of 1000 to 10000 g/mol, more preferably in the range of 1500 to 5000 g/mol. The respective molecular weights and molecular weight distributions can effectively be determined by GPC using appropriate reference standards such as polystyrene. The concentration in the solution to prepare the gel-polymer electrolyte is preferably in the range of 0.05 to 1.0 g/mL, preferably 0.15 to 0.25 g/mL.

The solvent in the precursor solutions for the gel-polymer electrolyte is conventionally a solvent that does not form salts with lithium or magnesium and does not react with the non-halogen lithium salt and non-halogen magnesium salt, which is regularly the case if the solvent is aprotic. If the lithium or magnesium salt is a borohydride, in addition the solvent should not comprise functional groups which can react with borohydride (i.e. the solvent is "inert" towards the borohydride). Since a particularly suitable group of solvents to fulfil these requirements are ethers and polyethers, the solvent in the inventive electrolyte is preferably an ether based solvent such as an ether, a polyether or a mixture of ethers and polyethers. In a particularly preferred embodiment, the solvent is selected from 1,2-dimethoxyethane, diglyme, triglyme, tetraglyme, 1,3-dioxolane and 1,4-dioxane, as well as mixtures of two or more of these polyethers.

As noted above, it has been found that the incorporation of a nanofiller can beneficially affect the overpotential of an electrochemical cell, which is prepared with such electrolyte. Thus, in a preferred embodiment the inventive gel-polymer electrolyte is prepared with a nanofiller. Preferred nanofillers are metal-oxide nanofiller and in particular Al₂O₃ and/or TiO₂. An especially preferred nanofiller is TiO₂. On recation with borohydride, the nanofiller can be integrated into the gel-polymer electrolyte network.

The amount of nanofiller is not subject to any relevant restriction. It has been found however, that to provide optimal reduction of the overpotential of a electrochemical cell provided with the inventive gel-polymer electrolyte, the concentration of nanofiller in a mixture to prepare the gel-polymer electrolyte should be in the range of from 1 wt% to 20 wt%, and preferably from 5 wt% to 12 wt%. In addition or alternative thereto, while the nanofiller should generally have a medium particle size of less than 1000 nm (and preferably less than 500 µm) as determined by the laser diffraction method, a particularly suitable medium particle size of the nanofiller is in the range of from 20 to 100 nm, and preferably from 50 to 100 nm.

The separator in the inventive electrochemical cell is used to consolidate the gel-polymer electrolyte, in that the electrolyte is incorporated into empty volume of the separator. Suitable materials for this purpose are e.g. glass, glass fiber or polyolefins. Thus, in a preferred embodiment of the invention, the separator is a porous glass separator, a glass fiber separator or a porous or fibrous polyolefin separator. If the separator is a polyolefin separator, the polyolefin is preferably poly(propylene) (PP). With regard to the material, from which the magnesium anode is prepared, there are also no relevant restrictions, except that it comprises magnesium in elemental form. Particularly suitable forms of magnesium include magnesium foil, bulk magnesium, pressed magnesium powder, Rieke magnesium, or mixtures of magnesium powder or Rieke magnesium. A highly preferred magnesium anode material is magnesium foil.

If the magnesium anode is prepared from a particulate magnesium precursor such as a powder, it is also possible to incorporate a carbonaceous material thereto. As particularly suitable carbonaceous materials carbon, graphite, graphene, graphene oxide or carbon black or mixtures of two or more of these materials can be mentioned.

If the cathode in the inventive electrochemical cell comprises sulfurated poly(acrylonitrile) (SPAN), the SPAN can have various shapes from among which fibrous SPAN, monolithic SPAN and/or pellicular SPAN are preferred in the invention. If the SPAN is fibrous SPAN, it is preferred that the fibers have diameters in the range of 0.2 - 200 µm, in particular in the range of 1 - 200 µm, more preferably in the range of 10 to 50 µm and even more preferably in the range of 20 - 40 µm. If the SPAN is a pellicular SPAN, it is preferred that the particles thereof have an average particle diameter of < 500 µm, preferably < 150 µm, and more preferably < 70 µm. While the lower limit of the average particle diameter is of less importance, it is preferred that the average particle diameter is equal to or more than 0.1 µm and preferably equal to or more than 1 µm. The particle size in each case is determined by, e.g. a laser-diffraction method.

The SPAN in the inventive electrochemical cell contains sufficient sulfur to provide the intended loading capacity. However, it is preferred that the SPAN has a sulfur content of 35 - 60 wt.-% and more preferably 38-45 wt.-%. The sulfur content can be determined by elemental analysis.

In addition to SPAN, the cathode can further contain additional materials such as binders and conductive materials. Examples of suitable conductive materials are e.g. the carbonaceous materials, which have been mentioned above as possible constituents of the magnesium anode. A particularly preferred conductive material is carbon black. As suitable binder e.g. poly(vinylidene fluoride) can be mentioned, which is e.g. commercially distributed as Solef 5130 by Solvay Germany.

If the cathode contains additional materials such as binders and conductive materials it is preferred that the SPAN accounts for at least about 50 wt.-% of the total weight of the electrode, more preferably least about 60 wt.-%. As a particularly suitable ratio of SPAN, binder and conductive materials 70±5%: 15±5 %: 15±5 % can be mentioned.

Further cathode materials could be intercalation cathodes, such as TiS₂, lithium titanate (LTO). Similar to SPAN, in addition to these active materials, binder and conductive materials are also added in the cathodes.

In a particularly preferred embodiment, the inventive electrochemical cell comprises a magnesium anode, a cathode based on SPAN or sulfur-impregnated activated carbon cloth, a gel polymer electrolyte prepared from polytetrahydrofurane, THF, LiBH₄ and Mg(BH₄)₂ and a nanofiller (preferably a TiO2 nanofiller) and a glass based separator.

A further aspect of the invention is directed at a battery or battery stack comprising at least one electrochemical cell as described above. In this regard, a battery stack designates a set of two or more corresponding batteries.

A yet further aspect of the invention is directed at a gel-polymer electrolyte, which is obtainable or obtained by crosslinking of a mixture of a polytetrahydrofurane with a magnesium borohydride and a lithium borohydride, wherein the borohydride of the type [BH₂R¹R²]⁻, in solution in the presence of a nanofiller, wherein R¹ and R² are as defined above.

A yet further aspect of the invention is directed at a separator for a rechargeable magnesium battery, which comprising a porous or fibrous base material as described above and a gel-polymer electrolyte as described above, which is embedded in the porous or fibrous base material.

A yet further aspect of the invention is directed at the use of the battery or battery stack as mentioned hereinbefore for energy storage. This use regularly involves at least charging the battery or battery stack by applying an electrical current. The use may further or alternatively comprise discharging the battery or battery stack by connecting a device thereto, which consumes electrical energy stored in the battery.

A yet further aspect of the invention is directed at the use of the battery or battery stack as described above in a car, preferably an electric car or hybrid car, a truck, preferably an electric truck or hybrid truck, an aeroplane, a drone, a helicopter or a ship. In addition, the battery or battery stack can be used in any device in which rechargeable batteries are currently used, including cell phones, computers, laptops and other handheld devices.

A yet further aspect of the invention is directed at the use of the battery or battery stack as described above in a stationary application; in such application the battery or battery starch is conventionally attached or connected to a stationary structure.

In the following, the invention will be further described by means of some illustrating examples, which however should not be taken as having any restrictive effect in this application.

### Examples

### Preparation of electrolytes

0.1 M Mg[BH₄]₂ and 1.5 M Li[BH₄] were dissolved in diglyme inside an Ar-filled glovebox. After one day of stirring, 10 wt% of TiO2 (particle size < 100 nm) were added.1 g PTHF (Mₙ = 2900 g/mol) was then dissolved in 5 mL THF, the resulting solution is referred to as *PTHF*/*THF.* The gel-polymer electrolyte, referred to as GPE, was synthesized by an *in-situ* crosslinking reaction between the Mg/Li borohydrides and the filler in diglyme and PTHF dissolved THF inside of a glass fiber separator. In the resulting GPE, the THF solvent remained in the electrolyte and was immobilized inside of the gel. The glass fiber separator was used for mechanical reinforcement. For the actual preparation of the GPE, 45 µL of a solution of the Mg/Li borohydrides in diglyme and 45 µL of a solution of PTHF in THF were pipetted onto a piece of glass fiber separator. The molar quantities of the Mg[BH₄]₂, Li[BH₄], and the -CH₂-CH₂-CH₂-CH₂-O- repeat unit from PTHF were 0.0045 mmol, 0.0675 mmol and 0.125 mmol, respectively.

### Preparation of cathodes

The active material in the cathode, particulate sulfurated poly(acrylonitrile) composite (SPAN), was prepared by a two-step thermal reaction. Firstly, ca. 1 g of poly(acrylonitrile) (PAN) powder was mixed thoroughly with excess (ca. 15 g) sulfur powder in a high-temperature resistant quartz glass tube, which was heated to 150 °C under Ar. After the sulfur in the glass tube was fully molten, the tube was cooled to room temperature. After that, it was placed inside a furnace. The temperature of the oven was first increased to 150 °C over 30 minutes and then held for 30 minutes at that temperature. Next, the temperature was gradually increased to 550 °C over 3 hours and held for 5 hours at that temperature. Nitrogen flow and water cooling were provided during the entire process. After the oven was cooled to room temperature over night, the quartz glass tube was removed from the oven. Then, a heat gun was used to melt and remove the obtained SPAN (black) together with excess sulfur (yellow). After that, in order to remove the excess sulfur from the obtained material, the material was Soxhlet-extracted using hot toluene at 150 °C for 2 days until no yellow compound was observed. The obtained SPAN compound was further dried under vacuum overnight, and then manually ground by a mortar and a pestle in order to reduce the particle size of the SPAN particles. To achieve a homogeneously particle size distribution, the SPAN particles were sieved through a 63 µm sieve. SPAN cathodes were prepared by mixing 70 wt-% SPAN powders, 15 wt-% super C65 carbon black and 15 wt-% poly(vinylidene fluoride) (PVDF) in 1-methyl-2-pyrrolidinone at 2,000 rpm for 6 minutes with a mixer. The obtained slurry was then casted onto a stainless-steel foil with a wet thickness of 300 µm. The coating was dried in an oven at 60 °C for 24 hours. Cathodes were punched into chips 12 mm in diameter. The average sulfur content was ca. 0.7-1 mg/cm².

For the preparation of an ACC/S cathode, activated carbon cloth (ACC 507-20, Kynol) was cut in electrodes 12 mm in diameter and dried at 120°C under vacuum for 12 h. In an argon-filled glovebox (O₂ < 1 ppm, H₂O < 1 ppm), sulfur powder (99.5 %, Alfa Aesar) was distributed on the ACC surface (approx. 1.6 mg/cm²) and melt infiltrated into the microporous carbon at 155°C for 24 h applying an autoclave vessel. Subsequently, the infiltrated ACC/S cathodes were placed in a glass tube under argon atmosphere and transferred to a tubular furnace to evaporate residual sulfur from the carbon surface at 330 °C for 3 h (5 K/min heating rate). The resulting ACC/S cathodes had a sulfur loading of approx. 0.6 mg/cm².

TiS₂ insertion cathodes were prepared by mixing 70% TiS₂ powder, 15% super C65 carbon black and 15% poly(vinylidene fluoride) (PVDF) in 1-methyl-2-pyrrolidinone at 2,000 rpm for 6 minutes with a mixer. The slurry was then casted onto a stainless-steel current collector with a wet thickness of 200 µm. The coating was dried in the oven at 60 °C for at least 24 hours. Cathodes were punched into chips 12 mm in diameter.

The LTO (lithium titanate) insertion electrodes were prepared by mixing 80% LTO powder, 10% super C65 carbon black and 10% poly(vinylidene fluoride) (PVDF) in 1-methyl-2-pyrrolidinone at 2,000 rpm for 6 minutes with a mixer. The slurry was then casted onto a stainless-steel current collector with a wet thickness of 300 µm. The coating was dried in an oven at 60 °C for at least 24 hours. Cathodes were punched into chips 12 mm in diameter.

### Preparation of a test cell

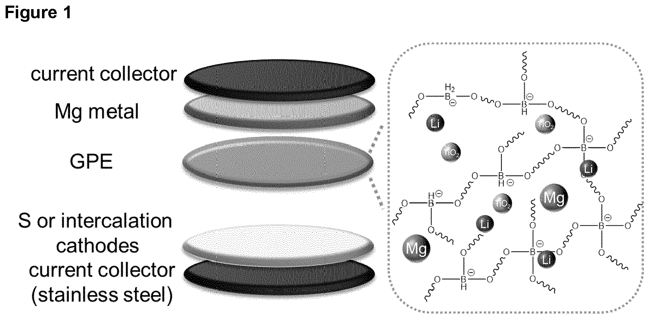

The electrochemical performance of Mg-S batteries and Mg-ion batteries was evaluated by Swagelok-Type cells comprising SPAN coated on stainless steel or TiS₂ or LTO as cathode, freshly scratched Mg foil as anode and GPE as electrolyte. When preparing the cell, 45 µL Mg/Li borohydrides and the filler in diglyme and 45 µL PTHF/THF were consecutively added to the glass fiber disc. All cells were allowed to rest for at least 3 hours before testing. A description of the structure of the respective electrodes is provided in Figure 1.

### Example 1:

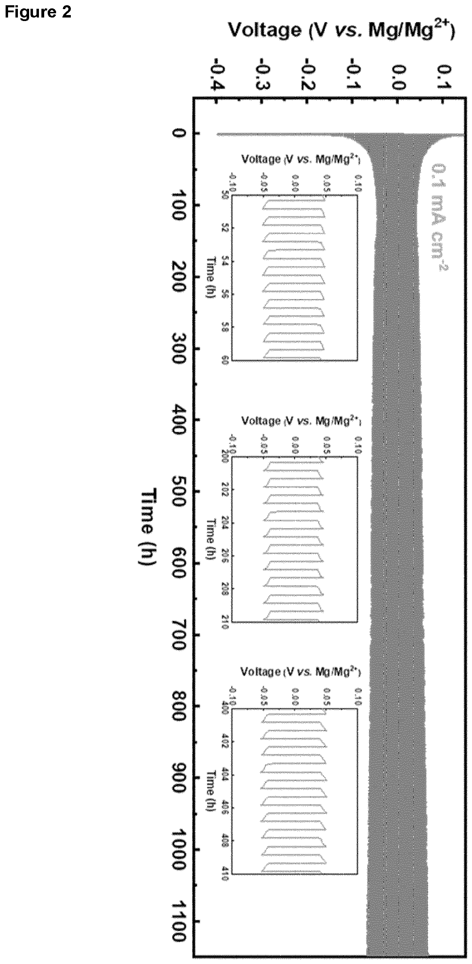

To examine the electrochemical performance of the Mg-S batteries, SPAN was selected as cathode material to test its compatibility with the GPE. The SPAN cathode, comprising SPAN, a conventional binder PVDF and conductive carbon black, was applied to a Swagelok-type cell together with a polished Mg foil and the GPE. The Mg||GPE||SPAN cell was charged and discharged at 0.2 C at room temperature (22 °C) for long-term cycling (1 C = 1672 mA gₛ⁻¹, Figure 2). Figure 2 in particular shows the long-term galvanostatic cycling of a symmetric Mg||Mg cell to investigate the polarization behavior at a current density of 0.1 mA cm⁻² and the compatibility of the GPE with the Mg foil. A very low overpotential (< 0.06 V) and very good long-term cycling stability (> 1100 cycles) at room temperature (22 °C) were observed. Additionally, the enlarged potential curves shown in the inset generally show flat features, indicating smooth Mg plating and stripping and good compatibility of the GPE with the Mg metal.

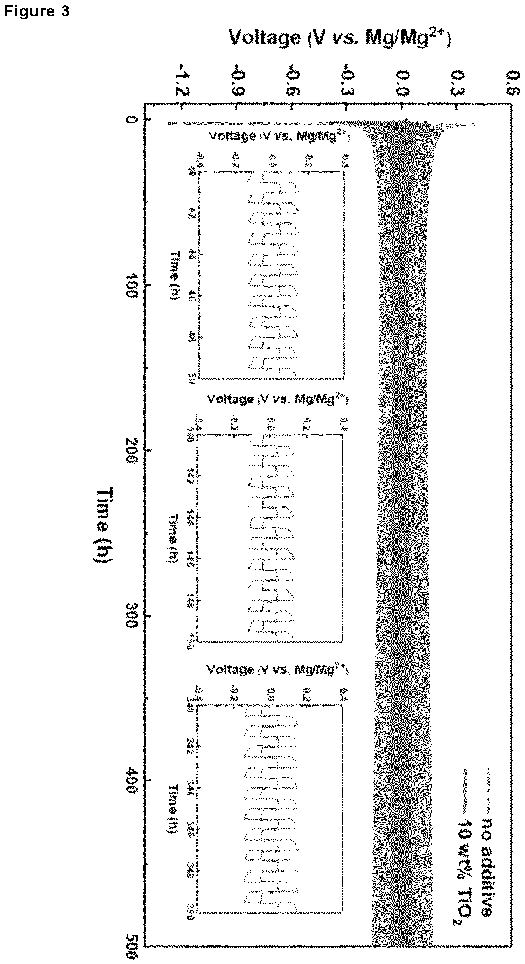

In Figure 3 the long-term galvanostatic cycling of a GPE-based symmetric Mg||Mg cell with a SPAN cathode at a current density of 0.1 mA cm⁻² is shown with and without TiO2 to investigate the influence of TiO2 on the polarization behavior. At room temperature (22 °C), the TiO₂-free GPE-based cell shows an overpotential that is nearly twice the overpotential of a TiO₂-containing GPE-based cell indicating the beneficial effect of TiO₂.

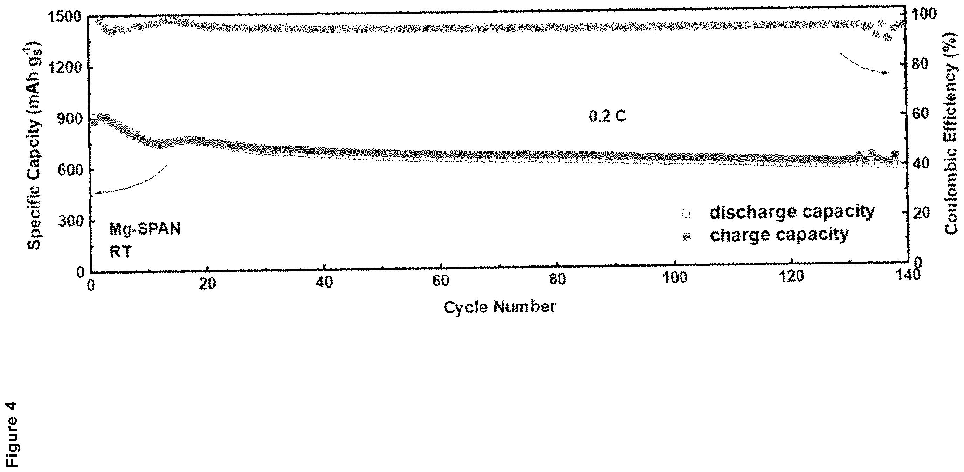

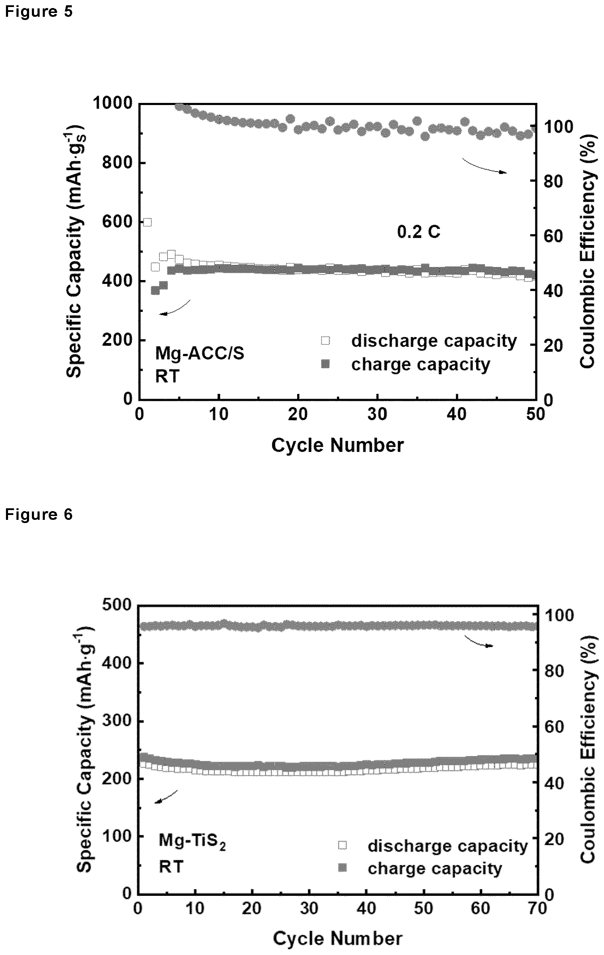

The cell with TiO2 the electrolyte delivered an initial discharge capacity of 908 mAh·gₛ⁻¹ and showed a slight capacity decay within the initial 10 cycles (ca. 750 mAh·gₛ⁻¹ at the 10^{th} cycle). After that, the cell cycled stable for another 130 cycles with only 0.1% capacity decay per cycle, resulting in superior capacity retention of ca. 600 mAh·gₛ⁻¹ after the 140^{th} cycle (see Figure 4). In Figure 4 (as well as in the following figures 5 to 7) ■ indicates the charge capacity, while □ indicates the discharge capacity.

### Example 2:

To examine the wide compatibility of the GPE with different cathode materials, the GPE was further tested with a cathode based on elemental sulfur on activated carbon sheets (ACC/S, Figure 5). The Mg||GPE||ACC/S cell was charged and discharged at 0.2 C at room temperature (22 °C) for long-term cycling (1 C = 1672 mA gₛ⁻¹). The cell delivered an almost constant discharge capacity of 420 mAh·gₛ⁻¹ for 50 cycles, indicating the successful suppression of the polysulfide shuttle and the wide compatibility of the GPE.

### Example 3:

To verify the compatibility of the GPE with intercalation cathode materials, the GPE was utilized in a TiS₂ intercalation cathode. Figure 6 shows the cycle stability test of Mg-TiS₂ cells, charged/discharged at 0.5 C (1 C = 239 mA g⁻¹) at room temperature. As shown in Figure 6, the Mg-TiS₂ cell stably delivered 235 mA g⁻¹ with approximately 98% Coulombic efficiency at 0.5 C for 70 cycles.

### Example 4:

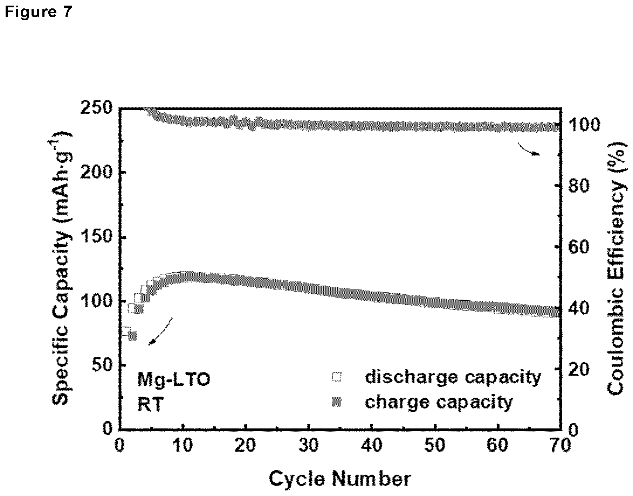

To verify the compatibility of the GPE with intercalation cathode materials, the GPE was also utilized in a spinel Li₄Ti₅O₁₂ (LTO) cathode. Figure 7 displays the Mg-LTO cell cycled at 0.2 C (1 C = 175 mAh g_{LTO}⁻¹) at room temperature. The discharge capacity increased from 80 to 120 mAh g_{LTO}⁻¹ over the initial 10 cycles and stayed almost constant during the following 60 cycles with 99.5% Coulombic efficiency, resulting in ca. 100 mAh g_{LTO}⁻¹ at the 70^{th} cycle.

## Claims

1. Electrochemical cell comprising a magnesium anode, a cathode based on sulfurated poly(acrylonitrile) (SPAN) or sulfur-impregnated activated carbon cloth (ACC/S) or an intercalation cathode, an Li- and Mg-containing gel-polymer electrolyte (GPE) and a separator, wherein the separator and the electrolyte are arranged between the cathode and the anode.

2. Electrochemical cell according to claim 1 wherein the Li- and Mg-containing gel-polymer electrolyte is obtained by crosslinking a solution of polytetrahydrofurane with a solution of a magnesium borohydride and a lithium borohydride, wherein the borohydride is of the type [BH₂R¹R²]⁻ and R¹ and R² are the same or different and are selected from H, alkyl, or alkoxy, in a solvent, which is preferably inert towards the borohydrides.

3. Electrochemical cell according to claims 1 or 2, wherein the magnesium anode is in form of a foil, bulk, pressed magnesium powder, Rieke magnesium, or mixtures of magnesium powder or Rieke magnesium with a carbonaceous material, preferably with one or more selected from carbon, graphite, graphene, graphene oxide or carbon black.

4. Electrochemical cell according to claim 2 or 3, wherein the Li- and Mg-containing gel-polymer electrolyte further comprises a nanofiller, preferably in the form of a metal oxide, more preferably Al₂O₃ and/or TiO₂, and end more preferably TiO₂.

5. Electrochemical cell according to claim 4, wherein the particle size of the nanofiller is in the range of 20-100 nm, preferably, 50 - 100 nm and/or wherein the nanofiller is present in the Li- and Mg-containing gel-polymer electrolyte in a concentration of from 1 wt% to 20 wt%, and preferably from 5 wt% to 12 wt%.

6. Electrochemical cell according to any one of claims 2 to 5, wherein R¹ and R² are the same or different and are selected from H, C₁₋₆-alkyl, or C₁₋₆-alkoxy, preferably, wherein R¹ and R² are each H.

7. Electrochemical cell according to any one of claims 1 to 6, wherein the SPAN is fibrous SPAN, preferably fibrous SPAN having fiber diameters in the range of 0.2 - 200 µm, in particular in the range of 10 - 50 µm, and more preferably in the range of 20 - 40 µm, monolithic SPAN and/or pellicular SPAN, preferably pellicular SPAN having an average particle diameter of < 500 µm, in particular < 150 µm, and more preferably < 70 µm and/or wherein the SPAN has a sulfur content of 35 - 60 wt.-% and preferably 40-45 wt.-%.

8. Electrochemical cell according to any of the preceding claims, wherein the separator is a porous glass separator, a glass fiber separator or a porous or fibrous polyolefin separator, preferably on the basis of poly(propylene) (PP).

9. Electrochemical cell according to any one of claims 2 to 8, wherein the solvent of the solution of the magnesium borohydride, the lithium borohydride and polytetrahydrofurane comprises an ether or a mixture of ethers and polyethers, preferably selected from one or more of 1,2-dimethoxyethane, diglyme, triglyme, tetraglyme, 1,3-dioxolane and 1,4-dioxane.

10. Electrochemical cell according to any one of claims 2 to 9, wherein the concentration of Mg(BH₂R¹R²)₂ in the solvent is in the range of 0.01 - 5 mol/L, preferably in the range of 0.05 - 0.2 mol/L and/or wherein the concentration of Li(BH₂R¹R²) in the solvent is in the range of 0.01 - 5 mol/L, preferably in the range of 0.5 to 2.0 mol/L, more preferably about 1.5 mol/L.

11. Electrochemical cell according to any one of t claims 2 to 10, wherein the concentration of polytetrahydrofurane in the solution is in the range of 0.05 to 1.0 g/mL, preferably 0.15 to 0.25 g/mL.

12. A battery or battery stack comprising at least one electrochemical cell as claimed in claims 1 - 11.

13. A gel-polymer electrolyte obtainable by crosslinking of a mixture of a polytetrahydrofurane with a magnesium borohydride and a lithium borohydride, wherein the borohydride of the type [BH₂R¹R²]⁻, in solution in the presence of a nanofiller, wherein R¹ and R² are as defined in claim 2.

14. A separator for a rechargeable magnesium battery comprising a porous or fibrous base material and a gel-polymer electrolyte according to claim 13 embedded therein.

15. Use of the battery or battery stack according to claim 12 for energy storage, wherein the battery or battery stack is electrically charged.

16. Use of the battery or battery stack according to claim 15 in a car, preferably an electric car or hybrid car, a truck, preferably an electric truck or hybrid truck, an aeroplane, a drone, a helicopter or a ship or in a stationary application.
